# EUROPEAN PATENT SPECIFICATION

(11) **EP 3 996 059 B1**
(45) Date of publication and mention of the grant of the patent: **12.02.2025**
(21) Application number: 21207019.7
(22) Date of filing: 08.11.2021
(51) Int. Cl.: G08B 17/10, G08B 17/107, G08B 17/11

(54) **SMOKE DETECTOR SENSITIVITY FOR BUILDING HEALTH MONITORING**
RAUCHMELDEREMPFINDLICHKEIT FÜR DIE GESUNDHEITSÜBERWACHUNG VON GEBÄUDEN
SENSIBILITÉ DES DÉTECTEURS DE FUMÉE POUR LA SURVEILLANCE DE LA SANTÉ DES BÂTIMENTS

(30) Priority: 09.11.2020 US 202063198725 P
(43) Date of publication of application: 11.05.2022
(73) Proprietor: Carrier Corporation, Palm Beach Gardens, FL 33418 (US)
(72) Inventor: CULP, Slade R., Bloomfield 06002 (US); HARRIS, Peter R., Palm Beach Gardens 33418 (US); ALEXANDER, Jennifer, Bloomington 55438 (US); RANJAN, Rajiv, Bloomfield 06002 (US)
(74) Representative: Dehns

(56) References cited:
- CA-A1- 2 950 887
- CN-A- 107 134 105
- US-A1- 2015 302 727
- US-A1- 2017 032 661
- US-B1- 10 441 832

## Description

The present invention relates to a detection system including a smoke detector as well as to a related method for monitoring indoor air quality with at least one smoke detector.

A smoke detector is a device that detects smoke and issues an alarm. A photoelectric smoke detector is a type of smoke detector that works based on light scattering principles. An ionization smoke detector is a type of smoke detector that works by monitoring the flow of ionic current through the smoke detector. Both the ionization-type and the photoelectric-type smoke detectors can be sensitive to dust and dirt accumulation in their detection chambers. In ionization-type smoke detectors, the presence of dust particles decreases conductivity and thereby distorts the ionic current flow. In photoelectric-type smoke detectors, the dust particles that accumulate on the detection chamber walls scatter light onto the light sensor and thereby cause false alarms and increase background noise.

Because the presence of dust in smoke detectors cannot be readily avoided, most commercial fire codes mandate that regular testing and cleaning procedures be instituted to avoid excessive dust accumulation. Unfortunately, cleaning a detector can be expensive, inconvenient, and time-consuming. Previously, some smoke detectors have been designed to minimize the amount of dust that settles on the walls of the detection chamber. However, the cost and complexity of such smoke detectors is relatively high. Therefore, many smoke detectors today include drift compensation to account for the change in the clean air signal (detector baseline drift), which, as mentioned above, may increase (for photoelectric-type detectors) or decrease (for ionization-type detectors) as a result of dust accumulation.

Drift compensation methodologies can provide for changing the alarm threshold that must be crossed for an alarm to be triggered (e.g., so as to be able to consistently, accurately detect the presence of smoke as dust accumulates). The rate that the smoke detector gets dirty (and therefore the rate at which drift compensation needs to be employed) may be dependent on the environment in which the smoke detector is configured. For example, drift compensation may need to be employed more rapidly in dirtier environments than cleaner environments. This drift compensation may be completed either locally within the detector, or remotely at a control panel (which may be connected to multiple detectors). It is generally understood that the compensation may only be able to be adjusted to a certain point (which may be referred to as a drift compensation limit). As such, it is recommended that the detector be cleaned or replaced before the drift compensation limit is reached.

With increasing interest and awareness of indoor air quality (IAQ) it is vitally important that we utilize any readily available data regarding IAQ. As such, it is imperative that we recognize that existing smoke detection systems do not utilize the detector baseline drift data outside of adjusting the smoke detectors (i.e. to ensure that the smoke detectors are able to consistently, accurately detect the presence of smoke as dust accumulates).

Accordingly, there remains a need for a system and a method that are capable of utilizing the detector baseline drift data in a meaningful way so as to provide better, more robust monitoring of indoor air quality.

US 2017/032661 A1 discloses a system for facilitating smoke detector performance analysis including a server configured to receive operational data from an alarm panel and to perform analytics using the operational data. The invention is defined by the subject matter as claimed in claims and 1 and 10.

According to a first aspect, the invention provides a detection system including a smoke detector and at least one of a control panel and a server. The smoke detector includes a processor configured to determine whether a current condition indicates a need to trigger an alarm. The smoke detector is configured to measure a baseline. The at least one of a control panel and a server is/are configured to receive and compile a detector baseline signal, to determine an indoor air quality (IAQ) based on a rate of a baseline drift of the smoke detector and to establish at least one indoor air quality (IAQ) trend. The at least one of the control panel and the server are operably connected to an HVAC system, at least one of the control panel and the server configured to execute one or more HVAC system controls in response to at least one indoor air quality (IAQ) trend.

Optionally, each detector is configured to compensate for detector baseline drift.

Optionally, the control panel is configured to receive detector baseline signals from multiple smoke detectors.

Optionally, each respective smoke detector is configured to detect ambient materials within a room of a building, the building including at least one control panel. Optionally the detection system may comprise the building control panel as the control panel. Embodiments of the invention may comprise a building including the detection system, wherein each respective smoke detector may be configured to detect ambient materials within a room of the building and may be located within the respective room. The building may comprise multiple rooms each with a respective smoke detector of the detection system. There may be multiple buildings, each building including at least one control panel.

Optionally, the server is communicatively connected to at least one control panel. This may be the control panel of a building, as discussed above. The control panel connected to the server may be the control panel of the first aspect.

Optionally, at least one of the control panel and the server are configured to trigger a notification when an IAQ trend meets a certain criteria.

Optionally, the detection system further includes a mobile device communicatively connected to at least one of the control panel and the server.

Optionally, the mobile device includes an application, at least one indoor air quality (IAQ) trend viewable in the application.

Optionally, the mobile device includes at least one of a mobile phone, a mobile tablet, and a computer.

According to another aspect of the invention, a method for monitoring indoor air quality with at least one smoke detector is provided. This may be a method for monitoring indoor air quality of rooms of a building, e.g. a building as mentioned above. Each respective smoke detector includes a processor configured to determine whether a current condition indicates a need to trigger an alarm. Each respective smoke detector is configured to measure a baseline. The method may use a detection system having any or all features as described above. The method includes a step for transmitting at least one detector baseline signal from at least one smoke detector to at least one of a control panel and a server. The method includes a step for compiling, in at least one of the control panel and the server, the detector baseline signals to determine an indoor air quality (IAQ) based on a rate of a baseline drift of the smoke detector and to establish at least one indoor air quality (IAQ) trend. The method further includes a step for executing, with at least one of the control panel and the server, one or more HVAC system controls of an HVAC system in response to an IAQ trend, wherein the at least one of the control panel and the server are operably connected to an HVAC system.

Optionally, each detector is configured to compensate for detector baseline drift.

Optionally, the control panel is configured to receive detector baseline signals from multiple smoke detectors.

Optionally, the method further includes a step for triggering, with at least one of the control panel and the server, a notification when an IAQ trend meets a certain criteria.

Optionally, a mobile device is communicatively connected to at least one of the control panel and the server.

Optionally, the mobile device includes an application, at least one indoor air quality (IAQ) trend viewable in the application.

Optionally, the mobile device includes at least one of a mobile phone, a mobile tablet, and a computer.

The subject matter, which is regarded as the disclosure, is particularly pointed out and distinctly claimed in the claims at the conclusion of the specification. The following descriptions of the drawings, which show a certain example embodiment, should not be considered limiting in any way. With reference to the accompanying drawings, like elements are numbered alike:
FIG. 1 is a schematic illustration of an exemplary detection system including multiple smoke detectors configured to transmit detector baseline signals to at least one of a mobile device, a control panel, and a server,.
FIG. 2 is an exploded view of an exemplary smoke detector.
FIG. 3 is an illustration of an exemplary mobile device displaying an exemplary indoor air quality (IAQ) trend for a floor of a building.
FIG. 4 is an illustration of an exemplary mobile device displaying an exemplary indoor air quality (IAQ) trend for a particular room of the building shown in FIG. 4.
FIG. 5 is an illustration of an exemplary mobile device displaying an exemplary indoor air quality (IAQ) trend for a particular detector within the particular room shown in FIG. 5.
FIG. 6 is a flow diagram illustrating a method for monitoring indoor air quality (IAQ) with at least one smoke detector .

A detection system including a smoke detector configured to transmit a detector baseline signal (which may also be called a clean air signal) to at least one of a control panel and a server (in order to establish at least one indoor air quality (IAQ) trend), and a method for monitoring general indoor air quality trends with at least one smoke detector are provided. Rather than only using the detector baseline drift data to employ drift compensation to the smoke detector (i.e. to ensure that the smoke detector is able to consistently and accurately detect the presence of smoke as dust accumulates), the detection system described herein further utilizes the detector baseline data to provide insightful IAQ trends. It should be appreciated that these IAQ trends are capable of being provided without necessitating additional hardware (i.e. no independent IAQ specific detectors are required to produce the IAQ trends illustrated herein). By utilizing existing smoke detectors and existing detector baseline drift data, the cost and complexity of installing the detection system may be minimal (e.g., when compared to existing air quality monitoring systems that require dedicated, independent pieces of hardware). It is envisioned that these IAQ trends may be useful to estimate building health in comparison with historic trends or other buildings, which may empower building management systems to take action to improve building health. These IAQ trends may be provided in a wholistic manner (i.e. provided in the form of one IAQ trend for an entire building) and/or granular manner (i.e. provided in the form of one IAQ trend for a particular room, or even one IAQ trend for a particular smoke detector) in certain instances. For example, the IAQ trend(s) may provide room-to-room insights, or even building-to-building insights, which may be useful in situations such as university campuses, where multiple buildings are maintained by one entity. Although described herein to be particularly useful in commercial buildings and universities, it should be appreciated that the detection system described herein may be useful in any setting (e.g. residential, etc.).

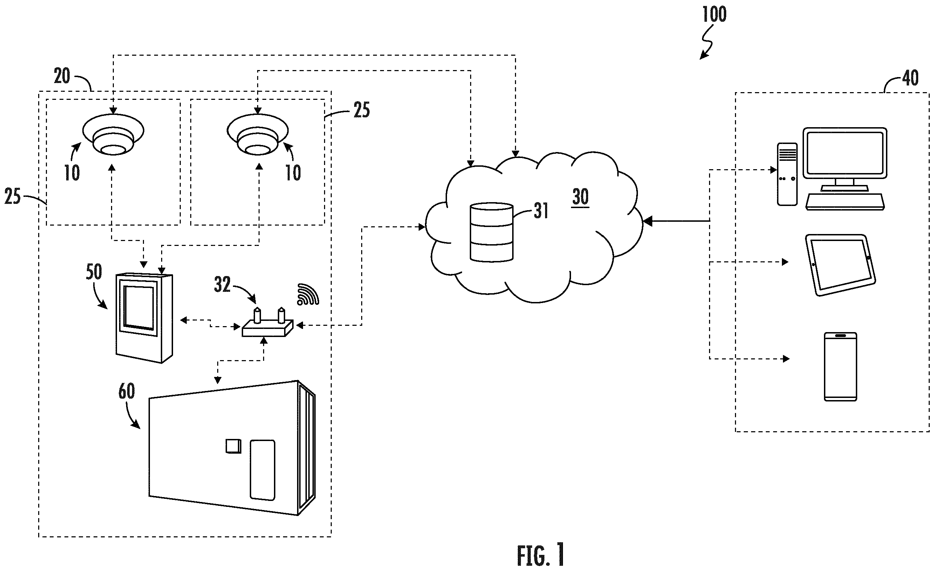

With reference now to the Figures, a schematic illustration of an exemplary detection system 100 including multiple smoke detectors 10 configured to transmit detector baseline signals to at least one of a control panel 50 and a server 31 is shown in FIG. 1. The smoke detector(s) 10 may, in certain instances, be referred to as a "detector(s)". It should be appreciated that although described herein as being used to detect smoke, the detector(s) 10, may, in certain instances, also be used to detect other constituents capable of entering the detector 10 (e.g. carbon monoxide, or other hazardous or nuisance materials). The smoke detector 10 may be capable of detecting when ambient materials, such as smoke and non-smoke particles carried in the air, enter the smoke detector 10. It should be appreciated that the smoke detector(s) may use any suitable smoke detection technology, which may be either ionization or photoelectric based in certain instances.

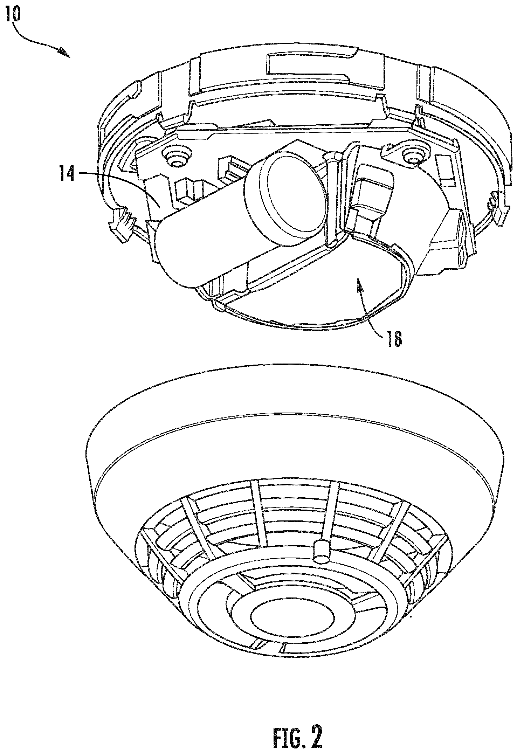

An exemplary smoke detector 10 is shown in FIG. 2. This smoke detector 10 is capable of detecting smoke using a photoelectric detection method. As shown, the smoke detector 10 may include a chamber 18 for receiving ambient airborne materials, and a supporting structure 14 (e.g., a PCB) disposed adjacent to the chamber 18. It should be appreciated that the smoke detector 10 may also include at least one optical component (not shown). For example, the smoke detector 10 may include one or more emitter(s) and/or receiver(s), which may be considered optical components. The emitter(s) may be any suitable light emitting diode (LED) capable of emitting light (e.g. infrared or any light in the visible spectrum, such as blue light) into the chamber 18. The receiver(s) may be configured to receive light reflected from the ambient materials in the chamber 18 and generate output signals (i.e. indicative of the current condition of the chamber 18). The output signals may be sent from the receiver to a processor (which may be disposed on the supporting structure 14 as a component of the supporting structure 14) to determine whether a current condition of the chamber 18 indicates a need to employ compensation drift or trigger a fault or an alarm. Although described herein that the smoke detector 10 may include a chamber 18 in certain instances, it should be appreciated that the smoke detector 10 may be chamberless (i.e., emit light into a monitored space instead of a chamber 18) in other instances.

When there is no smoke in the air, light emitted from the detector LEDs scatter off of the interior surface of the chamber and are received by the photodiode(s). This received signal in clean air (no smoke) is referred to here as the detector baseline. Over time, dust/dirt in the air can accumulate on the interior surface of the chamber 18. This causes the interior surfaces to scatter more light from the LEDs and increase the detector baseline (referred to as detector baseline drift). To compensate for detector baseline drift, the smoke detector 10 is configured to measure the detector baseline (and adjust the baseline if necessary). It should be appreciated that the detection system 100 described herein may incorporate multiple smoke detectors 10, each of which may be capable of measuring (and, if necessary, adjusting) their baseline to compensate for detector baseline drift. In certain instances the smoke detector 10 is configured to generate a fault when the smoke detector 10 reaches a certain level of dirtiness (the detector baseline exceeds a threshold). The rate at which this detector baseline drift occurs correlates to the indoor air quality (IAQ) of the environment in which the smoke detector 10 is placed. That is, the drift rate may be faster in environments with more dust/dirt in the air.

As shown in FIG. 1, each smoke detector 10 may be configured to transmit a detector baseline signal to at least one of a control panel 50 and a server 31 (e.g., which may be housed in a cloud-based network 30). It should be appreciated that the transmission may not be direct in certain instances. For example, the detector baseline signal may be transmitted to the control panel 50 from the smoke detector 10 before the detector baseline signal is transmitted to the server 31 or to a mobile device 40. It is envisioned that the control panel 50 may be configured to receive detector baseline signals from multiple smoke detectors 10. For example, as shown in FIG. 1, each respective smoke detector 10 may be configured to detect ambient materials within a particular room 25 of a building 20, which may include at least one control panel 50. It should be appreciated that each control panel 50 may be connected to numerous hazard detectors (e.g. smoke detectors 10, etc.), notification devices (e.g. horns, strobes, annunciators, etc.), alarm triggers (e.g. pull stations, call points, door alarms, etc.), and other communicatively connected infrastructure. To receive the detector baseline signals from the respective smoke detector(s) 10, the control panel 50 may be connected through one or more physical link(s) (e.g., hard-wired), and/or wireless connection(s) (e.g. using Wi-Fi, Bluetooth, Bluetooth Low Energy (BTLE), Zigbee, infrared, cellular, or any other suitable wireless connection) to one or more smoke detectors 10.

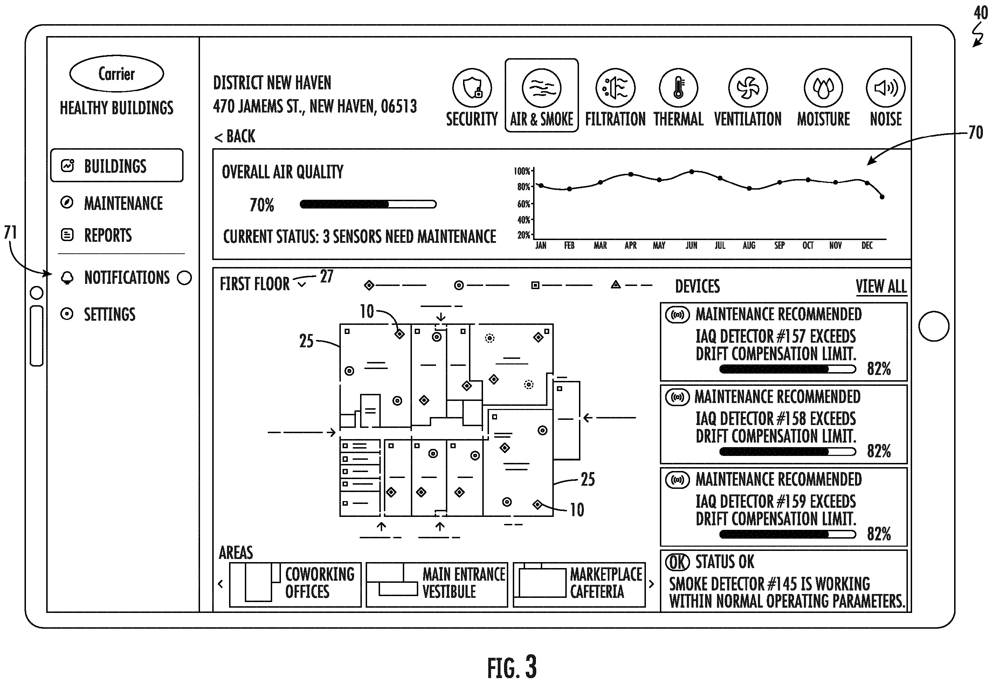

As shown in FIG. 1, the control panel 50 may be communicatively connected to the server 31 using at least one gateway 32, such as a router (which may be located within same building 20 in which the control panel 50 is located). The connection between the control panel 50 and the gateway 32 may be completed through any suitable wireless connection(s) (e.g., Wi-Fi, Bluetooth, Bluetooth Low Energy (BTLE), Zigbee, infrared, cellular, or any other suitable wireless connection), and/or a wired connection(s) (e.g. UART, Serial, Fiber-optic, SPI, Ethernet cable, or any other suitable wired connection). It is envisioned that the compiling of the detector baseline signals to establish at least one indoor air quality (IAQ) trend 70 (shown in FIGs. 3-5) may be completed in at least one of the control panel 50 and the server 31 (e.g., using any suitable processor, programming, etc.). In certain instances a mobile device 40 is communicatively connected (e.g., through one or more wired or wireless connections) with at least one of the control panel 50 and the server 31.

For example, it is envisioned that the server 31 may be an application server in certain instances, and one or more mobile device(s) 40 may be seamlessly connected with the server 31 though an application, which may be either web-based or downloaded to the memory of the mobile device 40) so as to enable interaction (e.g., to view the IAQ trends, etc.) with the detection system 100. The mobile device(s) 40 described herein may include, among others, mobile phones, mobile tablet, or computers such as those running the Android^{™} operating system of Google Inc., of Mountain View, Calif., or the iOS^{™} operating system of Apple Inc., of Cupertino, Calif., or the BlackBerry^{™} operating system of BlackBerry Limited, of Waterloo, Ontario. The mobile device 40 may be programmed with an application (i.e. an app) that allows the mobile device 40 to interact (e.g., to view at least one IAQ trend, etc.). Exemplary mobile devices 40 displaying exemplary indoor air quality (IAQ) trends 70 are shown in FIG. 3-5.

FIG. 3 illustrates an exemplary view of an indoor air quality (IAQ) trend 70 for a floor 27 of a building 20, which, as shown, may be viewable in an application on a mobile device 40. It should be appreciated that multiple IAQ trends 70 may be provided by the detection system 100 described herein, each of which may have different levels of granularity. As shown, the IAQ trend 70 may be represented in terms of a percentage (%) which relates the adjusted baseline to the dirtiness level threshold. This percentage may indicate the level of dirtiness of the smoke detector(s) 10 on the particular floor 27. As shown, the detection system 100 may provide a notification 71 when the level of dirtiness for a particular smoke detector 10 on the particular floor 27 is above a certain level of dirtiness (such as 80%, etc.). It should be appreciated that the level of dirtiness at which a notification may triggered may vary, and, in certain instances, may be adjustable based on user preference, etc. It is envisioned that these notifications may help inform building management when a particular detector 10 is in need of cleaning or replacement. In addition to aiding with maintenance, the detection system 100 described herein may provide useful insights into long term (or short term in certain instances) indoor air quality trends for different areas (e.g., particular floors 27, etc.) of the building 20, which may encourage potential mitigation (e.g., using the HVAC system 60 (shown in FIG. 1)) of the different areas (e.g., particular floors 27, etc.).

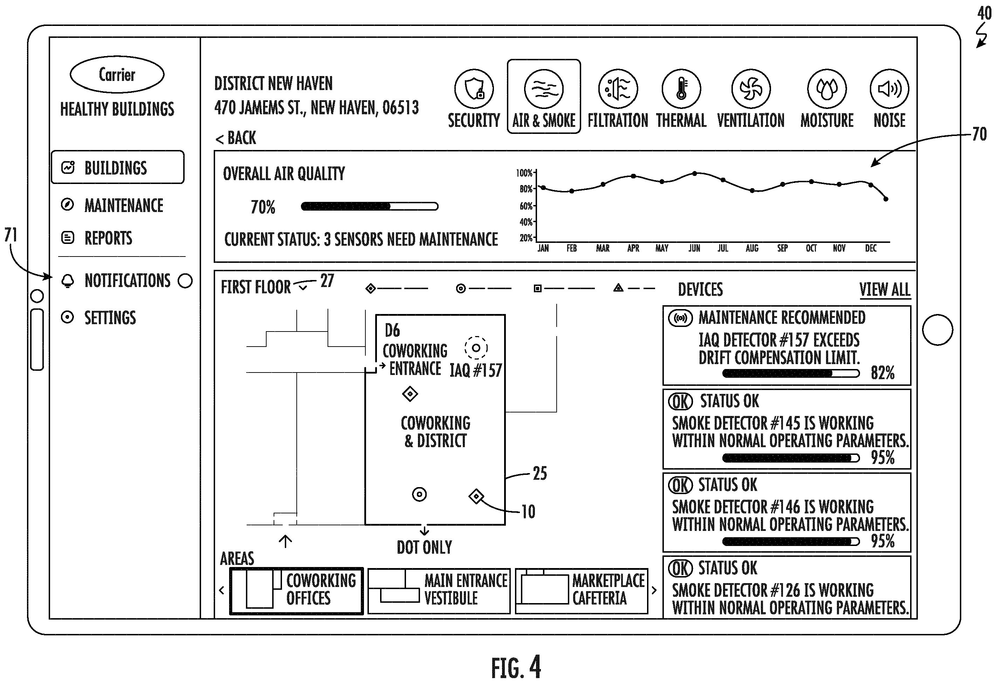

FIG. 4 illustrates an exemplary view of an indoor air quality (IAQ) trend 70 for a particular room 25 of a certain floor 27 of a building 20, which, as shown, may be viewable in an application on a mobile device 40. As shown, the detection system 100 may provide an IAQ trend 70 in terms of a particular room 25 (which may be represented in terms of a percentage (%). This percentage may indicate the level of dirtiness of the smoke detector(s) 10 in the particular room 25. As shown, the detection system 100 may provide a notification 71 when the level of dirtiness of a particular smoke detector 10 in the particular room 25 is above a certain level of dirtiness (such as 80%, etc.). It should be appreciated, as stated above, that the level of dirtiness at which a notification may be triggered may vary, and, in certain instances, may be adjustable based on user preference, etc. As described above, these notifications may help inform building management when a particular detector 10 is in need of cleaning or replacement, and may be used to illustrate mitigation needs for a particular area (e.g., floor 27, room 25, etc.).

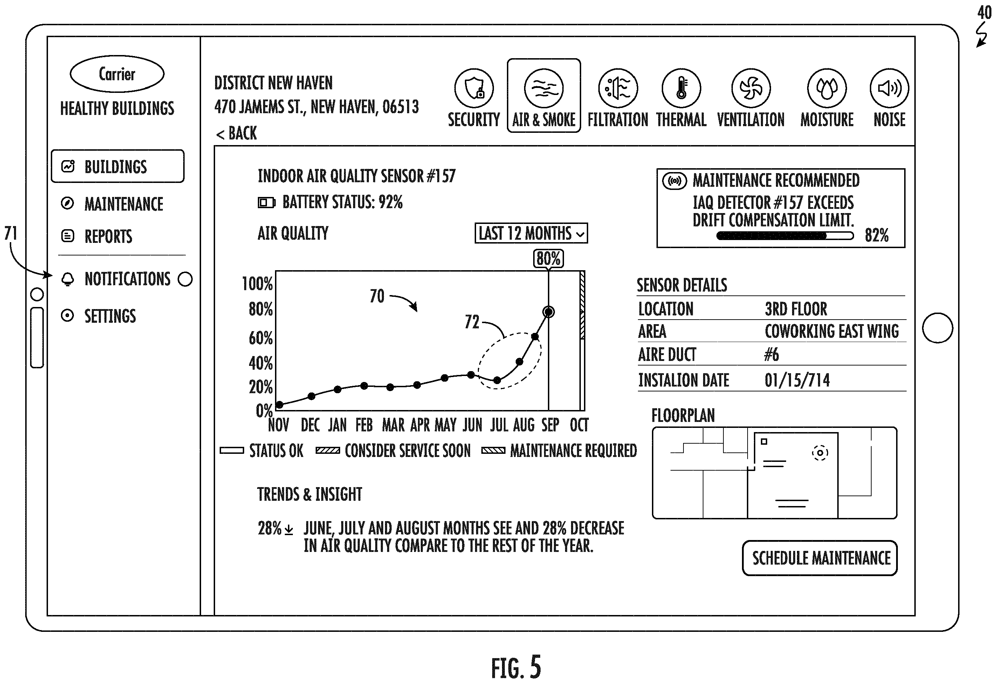

FIG. 5 illustrates an exemplary view of an indoor air quality (IAQ) trend 70 for a particular detector 10 of a building 20, which, as shown, may be viewable in an application on a mobile device 40. As shown, the detection system 100 may provide an IAQ trend 70 in terms of a particular detector 10 (e.g., which may be represented in terms of a percentage (%). This percentage may indicate the level of dirtiness of the particular detector 10. As shown, the detection system 100 may provide a notification 71 when the level of dirtiness for a particular smoke detector 10 is above a certain limit (such as 80%, etc.). It should be appreciated, as stated above, that the level of dirtiness at which a notification may be triggered may vary, and, in certain instances, may be adjustable based on user preference, etc. As described above, these notifications may help inform building management when the detector 10 is in need of cleaning or replacement, and may be used to illustrate mitigation needs for a particular area (e.g., floor 27, room 25, etc.) in which the detector 10 is placed.

At least one of the control panel 50 and the server 31 may be configured to trigger a notification 71 when an IAQ trend 70 (e.g., for a particular floor 27, room 25, detector 10, etc.) meets a certain criteria (e.g., such as an abnormality 72, etc.). An abnormality 72 may be viewed as a certain slope of the IAQ trend 70 (which may indicate a rapid change in the indoor air quality). It will be appreciated that a notification 71 may be triggered in the absence of an abnormality 72 in certain instances. For example, a notification 71 may be triggered periodically to routinely inform building management as to the IAQ trend(s) 70 even when there is no abnormality 72. These IAQ trends 70 may be useful to provide long-term (e.g., by the day, month, year, etc.) insights. As mentioned above, these trends may be useful to compare indoor air quality in a building-to-building or a room-to-room manner, which may assist with informing maintenance decisions and/or encouraging mitigation efforts (e.g., which may improve the health of those occupying the particular space).

These mitigation efforts are in the form of executing one or more controls of an HVAC system 60 (shown in FIG. 1), which may include operating one or more different components (e.g., such as fans, vents, filtration technologies, etc.) of the HVAC system 60. The HVAC system 60 is connected to the control panel 50 and/or the server 31 (e.g., it may be indirectly through connection with the gateway 32), which enables the HVAC system 60 to be controlled in response to at least one indoor air quality trend 70. For example, the detection system 100 described herein may provide for the automatic more frequent opening of an outdoor vent and the activating of a fan to drive the air, containing the high levels of particles such as dust, etc., out of a building 20 that has been identified by the detection system 100 to have poor IAQ. These mitigation efforts, in whatever form, may help improve the health of those occupying the particular space, for example, by reducing their exposure to air with high levels of particles such as dust, dirt, etc.

As mentioned above, it is envisioned that the design and configuration of the detection system 100 described herein may make it possible to provide insightful indoor air quality trends with minimal cost and complexity (e.g., when compared to existing air quality monitoring systems that utilize dedicated, independent pieces of hardware). Instead of requiring new hardware, as is typical with air quality monitoring systems, the detection system 100 described herein utilizes readily available detector baseline data to provide insightful IAQ trends. These trends may be useful to estimate building health in comparison with historic trends, which may empower building management to take action to improve building health. It should be appreciated that the detection system 100 described herein may be useful in any environment (e.g., hospitals, restaurants, hotels, universities, etc.) that incorporates smoke detectors 10 which are capable of measuring (and, if necessary, adjusting) their baseline.

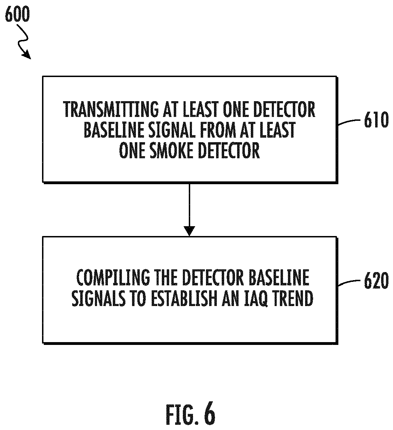

Regardless of the setting in which the detection system 100 is utilized, the method for monitoring indoor air quality may be the same. An exemplary method 600 for monitoring indoor air quality with at least one smoke detector 10 is shown in FIG. 6. The method 600 may be performed, for example, using the exemplary detection system 100 shown in FIG. 1, and described above, which may include at least one exemplary smoke detector shown in FIG. 2. The method 600 includes step 610 for transmitting a detector baseline signal from at least one smoke detector 10 to at least one of a control panel 50 and a server 31, each of which may have different limitations as set forth above. The method 600 includes step 620 for compiling, in at least one of the control panel 50 and the server 31, the detector baseline signals over time to establish at least one indoor air quality (IAQ) trend 70. In some embodiments, the smoke detector(s) 10 is configured to compensate for detector baseline drift. These IAQ trends may incorporate detector baseline signals from multiple detectors 10, each of which may be connected to the same or different control panel 50. As mentioned above, the method 600 may provide for the triggering of a notification 71 and/or the operation of one or more components of an HVAC system 60 in response to an IAQ trend. As shown in FIGs. 3-5, these IAQ trends may be provided in different levels of granularity, which may be viewable through a mobile device 40 (i.e. in an application).

The use of the terms "a" and "and" and "the" and similar referents, in the context of describing the invention, are to be construed to cover both the singular and the plural, unless otherwise indicated herein or cleared contradicted by context. The use of any and all examples, or exemplary language (e.g., "such as", "e.g.", "for example", etc.) provided herein is intended merely to better illuminate the invention and does not pose a limitation on the scope of the invention unless otherwise claimed. No language in the specification should be construed as indicating any non-claimed elements as essential to the practice of the invention.

While the present disclosure has been described with reference to an exemplary embodiment or embodiments, it will be understood by those skilled in the art that various changes may be made without departing from the scope of the present invention, which is defined by the claims. In addition, many modifications may be made to adapt a particular situation or material to the teachings of the present disclosure. Therefore, it is intended that the present invention not be limited to the particular embodiment disclosed for carrying out this present invention, but that the present invention will include all embodiments falling within the scope of the claims.

## Claims

1. A detection system (100) comprising:
a smoke detector (10); and
at least one of a control panel (50) and a server (31),
wherein the smoke detector (10) comprises a processor configured to determine whether a current condition indicates a need to trigger an alarm, wherein the smoke detector (10) is configured to measure a baseline, and
wherein the at least one of the control panel (50) and the server (31) are/is configured to:
receive and compile a detector baseline signal;
determine an indoor air quality (IAQ) based on a rate of a baseline drift of the smoke detector; and
establish at least one indoor air quality (IAQ) trend (70),
**characterized in that**:
the at least one of the control panel (50) and/or the server (31) are/is operably connected to an HVAC system (60), the at least one of the control panel (50) and the server (31) being configured to execute one or more HVAC system controls in response to at least one indoor air quality (IAQ) trend (70).

2. The detection system of claim 1, wherein each detector is configured to compensate for detector baseline drift.

3. The detection system of claim 1 or 2, wherein the control panel (50) is configured to receive detector baseline signals from multiple smoke detectors (10).

4. The detection system of claim 1, 2 or 3, wherein each respective smoke detector (10) is configured to detect ambient materials within a room (25) of a building (20), the building (20) comprising at least one control panel (50).

5. The detection system of claim 4, wherein the server (31) is communicatively connected to at least one control panel (50).

6. The detection system of any preceding claim, wherein the at least one of the control panel (50) and/or the server (31) are/is configured to trigger a notification (71) when an IAQ trend (70) meets a certain criteria.

7. The detection system of any preceding claim, comprising a mobile device (40) communicatively connected to at least one of the control panel (50) and the server (31).

8. The detection system of claim 7, wherein the mobile device (40) comprises an application, at least one indoor air quality (IAQ) trend (70) viewable in the application.

9. The detection system of claim 7 or 8, wherein the mobile device (40) comprises at least one of a mobile phone, a mobile tablet, and a computer.

10. A method for monitoring indoor air quality with at least one smoke detector (10), each respective smoke detector (10) comprising a processor configured to determine whether a current condition indicates a need to trigger an alarm, wherein each respective smoke detector (10) is configured to measure a baseline, the method comprising:
transmitting at least one detector baseline signal from at least one smoke detector (10) to at least one of a control panel (50) and a server (31);
compiling, in at least one of the control panel (50) and the server (31), the detector baseline signals to determine an indoor air quality (IAQ) based on a rate of a baseline drift of the smoke detector, and to establish at least one indoor air quality (IAQ) trend (70); and
executing, with at least one of the control panel (50) and the server (31), one or more HVAC system controls of an HVAC system (60) in response to an IAQ trend (70), wherein the at least one of the control panel (50) and/or the server (31) are/is operably connected to an HVAC system (60).

11. The method of claim 10, wherein each detector is configured to compensate for detector baseline drift.

12. The method of claim 10 or 11, wherein the control panel (50) is configured to receive detector baseline signals from multiple smoke detectors (10).

13. The method of claim 10, 11, or 12, comprising: triggering, with at least one of the control panel (50) and the server (31), a notification (71) when an IAQ trend (70) meets a certain criteria.

14. The method of any of claims 10 to 13, wherein a mobile device (40) is communicatively connected to at least one of the control panel (50) and the server (31).

15. The method of claim 14, wherein the mobile device (40) comprises an application, at least one indoor air quality (IAQ) trend (70) viewable in the application; and/or wherein the mobile device (40) comprises at least one of a mobile phone, a mobile tablet, and a computer.

## Patentansprüche

1. Meldesystem (100), umfassend:
einen Rauchmelder (10); und
mindestens eines von einem Bedienfeld (50) und einem Server (31),
wobei der Rauchmelder (10) einen Prozessor umfasst, der zum Bestimmen konfiguriert ist, ob ein aktueller Zustand eine Notwendigkeit zum Auslösen eines Alarms angibt, wobei der Rauchmelder (10) zum Messen eines Ausgangswerts konfiguriert ist und
wobei das mindestens eine von dem Bedienfeld (50) und dem Server (31) zu Folgendem konfiguriert ist:
Empfangen und Kompilieren eines Melder-Ausgangswertsignals;
Bestimmen einer Raumluftqualität (indoor air quality - IAQ) basierend auf einer Rate eines Ausgangswertdrifts des Rauchmelders; und
Ermitteln mindestens eines Trends (70) der Raumluftqualität (IAQ),
**dadurch gekennzeichnet, dass**:
das mindestens eine von dem Bedienfeld (50) und/oder dem Server (31) mit einem HLK-System (60) wirkverbunden ist, wobei das mindestens eine von dem Bedienfeld (50) und dem Server (31) als Reaktion auf mindestens einen Trend (70) der Raumluftqualität (IAQ) zum Ausführen einer oder mehrerer HLK-Systemsteuerungen konfiguriert ist.

2. Meldesystem nach Anspruch 1, wobei jeder Melder zum Kompensieren eines Ausgangswertdrifts des Melders konfiguriert ist.

3. Meldesystem nach Anspruch 1 oder 2, wobei das Bedienfeld (50) zum Empfangen von Melder-Ausgangswertsignalen von mehreren Rauchmeldern (10) konfiguriert ist.

4. Meldesystem nach Anspruch 1, 2 oder 3, wobei jeder jeweilige Rauchmelder (10) zum Erfassen von Umgebungsmaterialien innerhalb eines Raumes (25) eines Gebäudes (20) konfiguriert ist, wobei das Gebäude (20) mindestens ein Bedienfeld (50) umfasst.

5. Meldesystem nach Anspruch 4, wobei der Server (31) mit mindestens einem Bedienfeld (50) kommunikativ verbunden ist.

6. Meldesystem nach einem der vorhergehenden Ansprüche, wobei das mindestens eine von dem Bedienfeld (50) und/oder dem Server (31) zum Auslösen einer Benachrichtigung (71) konfiguriert ist, wenn ein IAQ-Trend (70) ein bestimmtes Kriterium erfüllt.

7. Meldesystem nach einem der vorhergehenden Ansprüche, umfassend eine Mobilvorrichtung (40), die mit dem mindestens einen von dem Bedienfeld (50) und dem Server (31) kommunikativ verbunden ist.

8. Meldesystem nach Anspruch 7, wobei die Mobilvorrichtung (40) eine Anwendung umfasst, wobei mindestens ein Trend (70) der Raumluftqualität (IAQ) in der Anwendung sichtbar ist.

9. Meldesystem nach Anspruch 7 oder 8, wobei die Mobilvorrichtung (40) mindestens eines von einem Mobiltelefon, einem mobilen Tablet und/oder einem Computer umfasst.

10. Verfahren zum Überwachen der Raumluftqualität mit mindestens einem Rauchmelder (10), wobei jeder jeweilige Rauchmelder (10) einen Prozessor umfasst, der zum Bestimmen konfiguriert ist, ob ein aktueller Zustand eine Notwendigkeit zum Auslösen eines Alarms angibt, wobei jeder jeweilige Rauchmelder (10) zum Messen eines Ausgangswerts konfiguriert ist, wobei das Verfahren Folgendes umfasst:
Übertragen mindestens eines Melder-Ausgangswertsignals von mindestens einem Rauchmelder (10) zu mindestens einem von einem Bedienfeld (50) und einem Server (31);
Kompilieren der Melder-Ausgangswertsignals in mindestens einem von dem Bedienfeld (50) und dem Server (31) zum Bestimmen einer Raumluftqualität (IAQ) basierend auf einer Rate eines Ausgangswertdrifts des Rauchmelders und zum Ermitteln mindestens eines Trends (70) der Raumluftqualität (IAQ); und
Ausführen einer oder mehrerer HLK-Systemsteuerungen eines HLK-Systems (60) als Reaktion auf einen IAQ-Trend (70) mit mindestens einem von dem Bedienfeld (50) und dem Server (31), wobei das mindestens eine von dem Bedienfeld (50) und/oder dem Server (31) mit einem HLK-System (60) wirkverbunden ist.

11. Verfahren nach Anspruch 10, wobei jeder Melder zum Kompensieren eines Ausgangswertdrifts des Melders konfiguriert ist.

12. Verfahren nach Anspruch 10 oder 11, wobei das Bedienfeld (50) zum Empfangen von Melder-Ausgangswertsignalen von mehreren Rauchmeldern (10) konfiguriert ist.

13. Verfahren nach Anspruch 10, 11 oder 12, umfassend: Auslösen einer Benachrichtigung (71) mit dem mindestens einen von dem Bedienfeld (50) und dem Server (31), wenn ein IAQ-Trend (70) ein bestimmtes Kriterium erfüllt.

14. Verfahren nach einem der Ansprüche 10 bis 13, wobei eine Mobilvorrichtung (40) mit dem mindestens einen von dem Bedienfeld (50) und dem Server (31) kommunikativ verbunden ist.

15. Verfahren nach Anspruch 14, wobei die Mobilvorrichtung (40) eine Anwendung umfasst, wobei mindestens ein Trend (70) der Raumluftqualität (IAQ) in der Anwendung sichtbar ist; und/oder die Mobilvorrichtung (40) mindestens eines von einem Mobiltelefon, einem mobilen Tablet und/oder einem Computer umfasst.

## Revendications

1. Système de détection (100) comprenant :
un détecteur de fumée (10) ; et
au moins l'un d'un panneau de commande (50) et d'un serveur (31),
dans lequel le détecteur de fumée (10) comprend un processeur configuré pour déterminer si une condition actuelle indique un besoin de déclencher une alarme, dans lequel le détecteur de fumée (10) est configuré pour mesurer une ligne de base, et
dans lequel l'au moins un du panneau de commande (50) et du serveur (31) est/sont configuré(s) pour :
recevoir et compiler un signal de base du détecteur ;
déterminer la qualité d'air intérieur (QAI) sur la base d'un taux de dérive de base du détecteur de fumée ; et
établir au moins une tendance en matière de qualité de l'air intérieur (QAI) (70),
**caractérisé en ce que** :
l'au moins un du panneau de commande (50) et/ou du serveur (31) est/sont fonctionnellement connecté(s) à un système CVC (60), l'au moins un du panneau de commande (50) et du serveur (31) étant configuré pour exécuter une ou plusieurs commandes de système CVC en réponse à au moins une tendance de qualité d'air intérieur (QAI) (70).

2. Système de détection selon la revendication 1, dans lequel chaque détecteur est configuré pour compenser la dérive de ligne de base de détecteur.

3. Système de détection selon la revendication 1 ou 2, dans lequel le panneau de commande (50) est configuré pour recevoir des signaux de base de détecteur provenant de plusieurs détecteurs de fumée (10).

4. Système de détection selon la revendication 1, 2 ou 3, dans lequel chaque détecteur de fumée respectif (10) est configuré pour détecter des matériaux ambiants dans une pièce (25) d'un bâtiment (20), le bâtiment (20) comprenant au moins un panneau de commande (50).

5. Système de détection selon la revendication 4, dans lequel le serveur (31) est connecté en communication à au moins un panneau de commande (50).

6. Système de détection selon une quelconque revendication précédente, dans lequel l'au moins un du panneau de commande (50) et/ou du serveur (31) est/sont configuré(s) pour déclencher une notification (71) lorsqu'une tendance QAI (70) répond à certains critères.

7. Système de détection selon une quelconque revendication précédente, comprenant un dispositif mobile (40) connecté de manière communicative à au moins l'un du panneau de commande (50) et du serveur (31).

8. Système de détection selon la revendication 7, dans lequel le dispositif mobile (40) comprend une application, au moins une tendance de qualité d'air intérieur (QAI) (70) visible dans l'application.

9. Système de détection selon la revendication 7 ou 8, dans lequel le dispositif mobile (40) comprend au moins l'un d'un téléphone mobile, d'une tablette mobile et d'un ordinateur.

10. Procédé de surveillance de la qualité d'air intérieur avec au moins un détecteur de fumée (10), chaque détecteur de fumée respectif (10) comprenant un processeur configuré pour déterminer si une condition actuelle indique un besoin de déclencher une alarme, dans lequel chaque détecteur de fumée respectif (10) est configuré pour mesurer une ligne de base, le procédé comprenant :
la transmission d'au moins un signal de base de détecteur provenant d'au moins un détecteur de fumée (10) à au moins un panneau de commande (50) et à un serveur (31) ;
la compilation, dans au moins l'un du panneau de commande (50) et du serveur (31), des signaux de base de détecteur pour déterminer une qualité d'air intérieur (QAI) sur la base d'un taux de dérive de base du détecteur de fumée, et pour établir au moins une tendance de qualité d'air intérieur (QAI) (70) ; et
l'exécution, avec au moins l'un du panneau de commande (50) et du serveur (31), d'une ou de plusieurs commandes de système CVC d'un système CVC (60) en réponse à une tendance QAI (70), dans lequel l'au moins un du panneau de commande (50) et/ou du serveur (31) est/sont connecté(s) de manière opérationnelle à un système CVC (60).

11. Procédé selon la revendication 10, dans lequel chaque détecteur est configuré pour compenser la dérive de la ligne de base de détecteur.

12. Procédé selon la revendication 10 ou 11, dans lequel le panneau de commande (50) est configuré pour recevoir des signaux de base de détecteur provenant de plusieurs détecteurs de fumée (10).

13. Procédé selon la revendication 10, 11 ou 12, comprenant : le déclenchement, avec au moins l'un du panneau de commande (50) et du serveur (31), d'une notification (71) lorsqu'une tendance QAI (70) répond à un certain critère.

14. Procédé selon l'une quelconque des revendications 10 à 13, dans lequel un dispositif mobile (40) est connecté de manière communicative à au moins l'un du panneau de commande (50) et du serveur (31).

15. Procédé selon la revendication 14, dans lequel le dispositif mobile (40) comprend une application, au moins une tendance de qualité d'air intérieur (QAI) (70) visualisable dans l'application ; et/ou dans lequel le dispositif mobile (40) comprend au moins l'un d'un téléphone mobile, d'une tablette mobile et d'un ordinateur.
